# FASCICULE DE BREVET EUROPEEN

(11) **EP 3 071 801 B1**
(45) Date de publication et mention de la délivrance du brevet: **03.01.2018**
(21) Numéro de dépôt: 14809490.7
(22) Date de dépôt: 18.11.2014
(51) Int. Cl.: F01D 25/16, F02C 7/06

(54) **SUPPORT DE PALIER À VRILLE D'ÉTANCHÉITÉ AXISYMÉTRIQUE**
LAGERAUFNAHME MIT AXIALSYMMETRISCHEM VERSCHLIESSBAREM BOHRER
BEARING HOLDER HAVING A AXISYMMETRIC SEALABLE GIMLET

(30) Priorité: 20.11.2013 FR 1361418; 05.12.2013 FR 1362184
(43) Date de publication de la demande: 28.09.2016
(73) Titulaire: SAFRAN AIRCRAFT ENGINES, 75015 Paris (FR)
(72) Inventeur: NOEL, Frédéric, F-77550 Moissy-Cramayel Cedex (FR); DEBRAY, Benoit, Argémiro, Matthieu, F-77550 Moissy-Cramayel Cedex (FR); DE SOUSA, Mario, César, F-77550 Moissy-Cramayel Cedex (FR); GHOSAROSSIAN-PRILLIEUX, Grégory, F-77550 Moissy-Cramayel Cedex (FR); POMMIER, Nicolas, F-77550 Moissy-Cramayel Cedex (FR)
(74) Mandataire: Regimbeau
(86) Numéro de dépôt international: PCT/FR2014/052952
(87) Numéro de publication internationale: WO 2015/075371

(56) Documents cités:
- EP-A2- 0 852 286
- EP-A2- 1 731 733
- FR-A1- 2 752 024
- US-A1- 2013 183 142

## Description

### DOMAINE DE L'INVENTION

La présente invention concerne les supports de palier de turbomachine, tel qu'un turboréacteur.

### ETAT DE LA TECHNIQUE

Une turbomachine comporte, d'amont en aval dans le sens de l'écoulement des gaz, un compresseur, une chambre de combustion et une turbine. Le rôle du compresseur est d'accroître la pression de l'air fourni à la chambre de combustion. Le rôle de la turbine est d'assurer l'entraînement en rotation du compresseur en prélevant une partie de l'énergie de pression des gaz chauds sortant de la chambre de combustion et en la transformant en énergie mécanique. Le compresseur et la turbine sont constitués d'un premier ensemble de pièces fixes constituant le stator et un second ensemble de pièces, susceptible d'être mis en rotation par rapport au stator, constituant le rotor. Le rotor du compresseur et le rotor de la turbine forment un ensemble solidairement relié par un arbre tournant. La rotation du rotor par rapport au stator est rendue possible au moyen d'un palier amont et d'un palier aval, un palier étant un organe mécanique supportant et guidant un rotor, en particulier l'arbre 2 de ce rotor. Les paliers amont et aval comportent une première partie fixée sur l'arbre rotor et une seconde partie fixée sur le stator par l'intermédiaire d'un support de palier. Un roulement est disposé entre les deux parties des paliers autorisant ainsi la rotation d'une partie du palier par rapport à l'autre. Le roulement est par exemple de type à billes, à rouleaux cylindriques ou à rouleaux coniques.

Le support de palier supporte les paliers amont et aval et participe au centrage du rotor. Un support de palier de turboréacteur présente une pluralité de conduits de récupération d'huile. Les conduits de récupération d'huile permettent la ventilation et l'équilibrage des pressions dans l'enceinte à huile. Ils alimentent en huile le palier amont et permettent également la récupération de surplus d'huile accumulé dans l'enceinte, en cas de forte inclinaison moteur.

Il est par ailleurs connu d'utiliser une vrille d'étanchéité soudée au support de palier et coopérant avec le palier amont pour assurer l'étanchéité de l'enceinte à huile. Les conduits de récupération d'huile forment alors des bosses de récupération d'huile au niveau de la vrille d'étanchéité. La soudure entre la vrille d'étanchéité et le support de palier n'est pas axisymétriques et nécessite une soudure manuelle, ce qui empêche l'industrialisation de tels supports de palier.

### EXPOSE DE L'INVENTION

L'invention permet de pallier au moins un des inconvénients précités en proposant un support de palier de turboréacteur présentant une géométrie de vrille d'étanchéité et de conduits de récupération d'huile permettant une soudure manuelle de la vrille d'étanchéité au reste du support palier.

A cet effet l'invention propose un support de palier de turbomachine, en particulier turboréacteur supportant un palier amont et définissant avec lui une enceinte à huile et une enceinte à air, le support de palier comportant une partie tronconique définissant une enceinte de palier amont et une enceinte interne aval, le support de palier comportant en outre une virole extérieure reliée par une soudure à une bride s'étendant extérieurement à partir de la partie tronconique, la virole extérieure portant une vrille d'étanchéité coopérant avec le palier amont pour assurer l'étanchéité de l'enceinte à huile, le support de palier comportant en outre une pluralité de conduits de récupération d'huile débouchant d'un côté sur l'enceinte interne aval et de l'autre côté sur l'enceinte de palier amont, le support de palier étant caractérisé en ce que les conduits de récupération d'huile débouchent sur l'enceinte de palier amont en aval de la soudure de la virole extérieure sur la bride et en ce que la soudure de la virole extérieure est axisymétrique.

Un tel support de palier présente l'avantage d'être plus facilement industrialisable grâce notamment à la soudure axisymétrique qui peut être réalisée de façon automatique contrairement aux soudures non axisymétriques que présentent les supports de palier de l'art antérieur.

L'invention est avantageusement complétée par les caractéristiques suivantes, prises individuellement ou en l'une quelconque de leurs combinaisons techniquement possibles :
- les conduits de récupération d'huile font saillie extérieurement radialement à partir de la partie tronconique ;
- les conduits de récupération d'huile présente chacun une section sensiblement d'une forme parmi les formes rectangulaire, circulaire et ovale ;
- le support de palier comporte trois conduits de récupération d'huile,
- les conduits de récupération d'huile sont régulièrement répartis angulairement ;
- les conduits de récupération d'huile présente chacun une section sensiblement d'une forme parmi les formes rectangulaire, circulaire et ovale ;
- la partie tronconique présente un diamètre augmentant vers l'aval à partir du palier amont ;
- le support de palier comporte en outre une partie flasque qui s'étend à partir de la partie tronconique jusqu'au palier aval ;
- la partie flasque est tronconique, son diamètre diminuant vers l'aval ;
- la partie flasque présente en outre une bride interne radiale à son extrémité aval, la bride interne radiale reliant la partie flasque à un couvercle d'arrivée d'huile.

L'invention concerne également une turbomachine comportant un support de palier comme décrit plus haut.

### DESCRIPTION DES FIGURES

D'autres objectifs, caractéristiques et avantages sortiront de la description détaillée qui suit en référence aux dessins donnés à titre illustratif et non limitatif parmi lesquels :
- la figure 1 est une vue en demi-coupe radiale d'un exemple de support de palier conforme à l'invention, au niveau d'un conduit de récupération d'huile,
- la figure 2 est une vue en perspective d'un support de palier conforme à l'invention ;
- les figures 3 à 5 sont des vues respectivement de face, de dessous (angle azimutal à 6 heures) et de dessus (angle azimutal à 12heures) d'un exemple de support de palier conforme à l'invention.

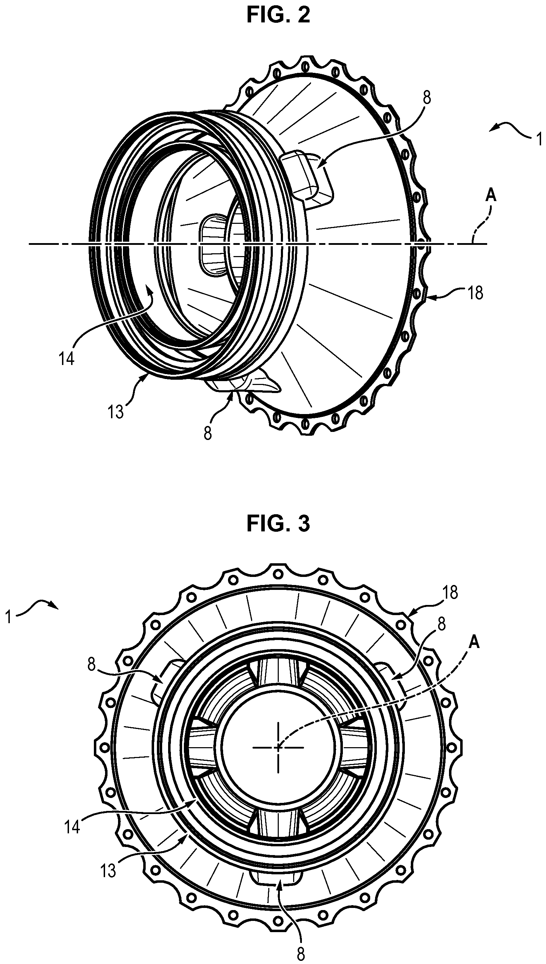

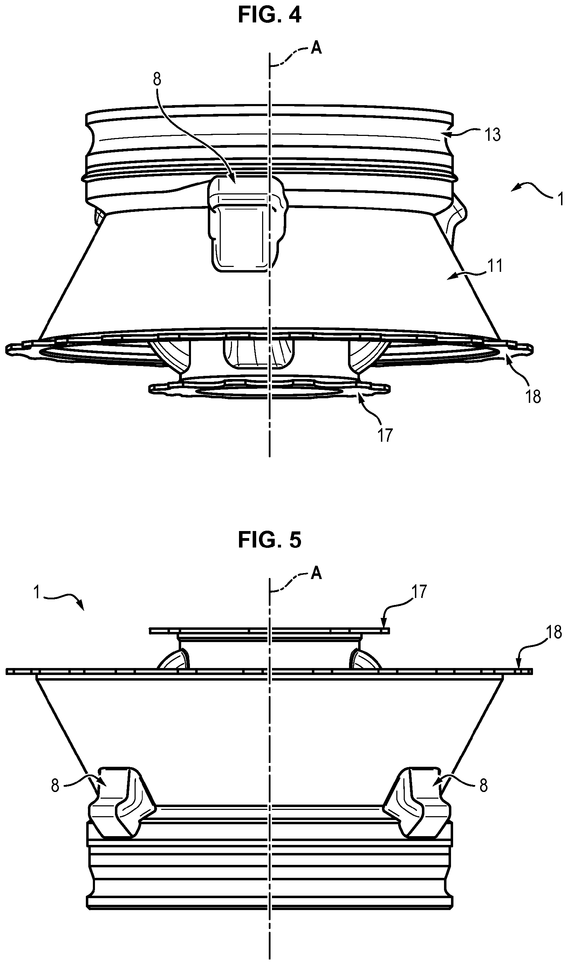

On note que les figures 4 et 5 illustrent respectivement les parties inférieure et supérieure du support de palier, c'est-à-dire les parties situées dans un angle azimutal aux alentours de respectivement 6 H et 12H dans le plan du support de palier de la figure 3. L'angle dans ce plan est défini par référence à un cadran horaire.

### DESCRIPTION DETAILLEE DE L'INVENTION

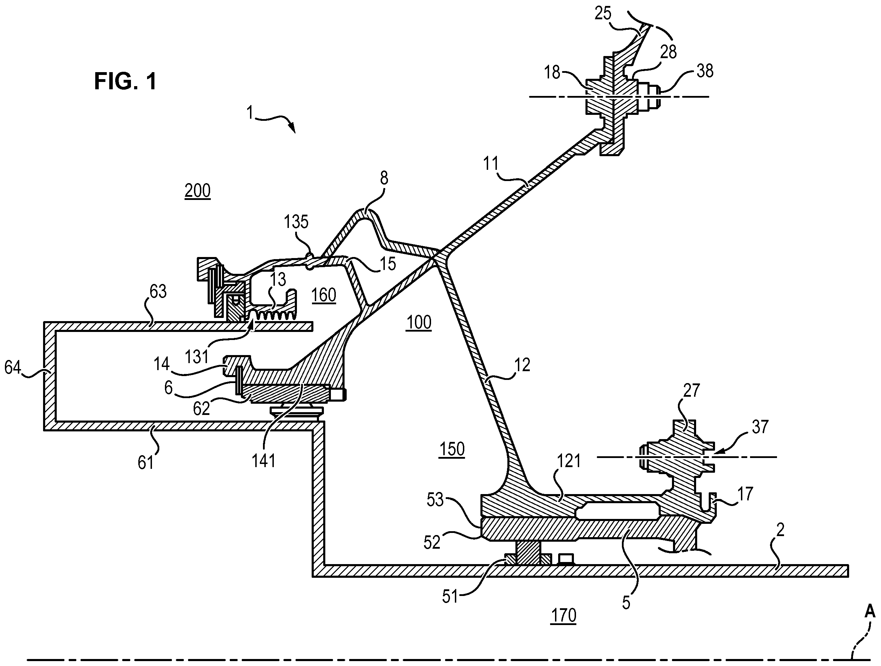

En référence aux figures 1 et 2, un arbre 2 est guidé en rotation selon l'axe géométrique A et positionné en translation par un palier amont 6 solidaire d'un carter d'échappement 25 de la turbomachine par l'intermédiaire d'un support de palier 1. Ce palier amont 6 est disposé juste à l'aplomb d'un étage de turbine basse pression. L'arbre 2 est aussi guidé à l'arrière de la turbomachine par un palier aval 5 également solidaire du carter 25 par l'intermédiaire du support de palier 1. Le support de palier 1 définit avec le palier amont 6 et le palier aval 5 une enceinte à huile 100 et une enceinte à air 200.

En référence aux figures 1 et 2, le support de palier 1 est une pièce présentant une symétrie autour de l'axe A du turboréacteur. Le support de palier 1 présente une partie tronconique 11 qui s'étend en s'élargissant vers l'aval, à partir du palier amont 6. Le support de palier 1 présente en outre une partie flasque 12 qui s'étend à partir d'un point milieu de la partie tronconique jusqu'au palier aval 5. La partie flasque 12 est tronconique, son diamètre diminuant vers l'aval. La partie tronconique 11 est prolongée en amont par une virole intérieure 14. La virole intérieure 14 s'étend axialement parallèlement à l'axe A du turboréacteur à partir de l'extrémité amont de la partie tronconique 11. La partie tronconique 11 définit par son espace externe une enceinte de palier amont 160 et par son espace interne une enceinte interne aval 150.

Le palier aval 5 comporte une bague interne 51 et une bague externe 52, entre lesquelles sont montés des rouleaux ou autres organes de roulement. La bague interne 51 est montée solidaire de l'arbre du compresseur 2 et la bague externe 52 est montée solidaire du carter 25 du turboréacteur 1.

Le palier amont 6 comporte une bague interne 61 et une bague externe 62, entre lesquelles sont montés des billes ou autres organes de roulement. La bague interne 61 est reliée solidairement à l'arbre 2 et la bague externe 62 solidaire du support de palier 1 et plus précisément de la virole intérieure 14 du support de palier 1. Les billes autorisent la rotation de la bague interne 61 par rapport à la bague externe 62, donc au support de palier 1. L'arbre 2 comprend en outre un bras externe 63 prolongeant une bride fixation 64

La bague externe 52 du palier aval 5 est reliée, par sa face externe, à une bride intermédiaire 53 fixée au support de palier 1 sur une bride externe 121. Cette dernière forme le bord interne d'une partie flasque 12 du support palier 1, positionnée sensiblement axialement parallèlement à l'axe A de la turbomachine.

La bague externe 62 du palier amont 6 est reliée, par sa face externe, à une pièce de liaison 141 fixée au support de palier 1. La pièce de liaison 141 forme le bord interne de la virole interne 14 du support de palier 1 et s'étend sensiblement axialement parallèlement à l'axe A de la turbomachine.

Une bride 15 s'étend sensiblement radialement extérieurement à partir d'un point de la partie tronconique 11 situé en aval de l'extrémité amont de la partie tronconique 11. Une virole extérieure 13 est soudée en un point de soudure 135 à cette bride 15. La virole extérieure 13 est en vis-à-vis de la virole intérieure 14. La virole extérieure 13 présente une surface interne en regard de la surface externe de la virole intérieure 14 comportant une vrille 131 d'étanchéité. Cette dernière coopère avec le bras externe 63 de l'arbre 2 pour former un système d'étanchéité assurant l'étanchéité de l'enceinte à huile 100. Un débit d'air peut être introduit dans l'espace existant entre la vrille 131 d'étanchéité et le bras externe 63 de l'arbre 2 et être entraîné par l'arbre en rotation sous l'effet des frottements et ainsi refouler l'huile qui a tendance à pénétrer dans l'espace existant entre la vrille 131 d'étanchéité et le palier amont 6, de manière à ce que le courant d'air généré refoule l'huile dans l'enceinte à huile 100. Le diamètre de la virole intérieure 14 est de l'ordre de 190mm.

La partie tronconique 11 du support de palier 1 présente une bride externe radiale 18 à son extrémité aval. La bride externe radiale 18 relie le support de palier au carter 25 par exemple par des boulons 38 traversant des orifices 28 ménagés sur la bride externe radiale 18. La partie flasque 12 du support de palier 1 présente en outre une bride interne radiale 17 à son extrémité aval. La bride interne radiale 17 est fixée à un couvercle d'arrivée d'huile (non représenté) par exemple par des boulons 37 traversant des orifices 27 ménagés sur la bride interne radiale 17.

En référence notamment aux figures 3 à 5, le support de palier 1 comporte une pluralité de conduits de récupération d'huile 8 débouchant d'un côté sur l'enceinte de palier amont 160 en aval de la soudure 135 et de l'autre côté sur l'enceinte interne aval 150. Ces conduits de récupération d'huile 8 font saillie de la partie tronconique 11. Le support de palier 1 comporte avantageusement trois conduits de récupération d'huile 8 régulièrement répartis angulairement à 180° les uns des autres suivant l'axe A, extérieurement radialement sur la périphérie de la partie tronconique 11. L'un des conduits 8 est positionné à six heures en azimuth. La section transversale de chacun des trois conduits de récupération d'huile 8 est sensiblement d'une forme parmi les formes rectangulaire, circulaire et ovale.

La somme des sections de chaque conduit correspond à la section minimale permettant le passage de l'huile. En cas de forte inclinaison moteur, les conduits de récupération d'huile 8 permettent la récupération de surplus d'huile accumulé dans l'enceinte interne aval 150 et alimentent en huile le palier amont 6. Les conduits de récupération d'huile 8 permettent en outre la ventilation et l'équilibrage des pressions dans l'enceinte à huile 100.

Le support de palier 1 présente l'avantage de ne pas présenter de bosse de récupération d'huile au niveau du point de soudure 135, puisque le conduit de récupération d'huile 8 est placé en aval du point de soudure 135. La soudure 135 peut ainsi devenir axisymétrique, ce qui facilite sa réalisation par exemple avec un bras de robot. La fonction d'étanchéité de la vrille 131 est dissociée du conduit de récupération d'huile 8.

Le support de palier 1 peut être fabriqué par un procédé de fabrication de fonderie et présente une masse inférieure au support de palier de l'art antérieur.

Le support de palier 1 répond aux exigences du dimensionnement mécanique dans son environnement et notamment du carter d'échappement et du rotor. En particulier il est adapté pour tenir les critères de tenue mécanique en cas de panne moteur. Le support de palier 1 est adapté pour éviter la résonnance dynamique de la vrille sur la plage de fonctionnement moteur et respecter les jeux avec les pièces situées dans l'environnement proche. Le support de palier 1 est industrialisable grâce notamment à la soudure axisymétrique.

## Revendications

1. Support de palier (1) de turbomachine, en particulier de turboréacteur, supportant un palier amont (6) et définissant avec lui une enceinte à huile (100) et une enceinte à air (200), le support de palier (1) comportant une partie tronconique (11) définissant une enceinte de palier amont (160) et une enceinte interne aval (150), le support de palier (1) comportant en outre une virole extérieure (13) reliée par une soudure (135) à une bride (15) s'étendant extérieurement à partir de la partie tronconique (11), la virole extérieure (13) portant une vrille d'étanchéité (131) coopérant avec le palier amont (6) pour assurer l'étanchéité de l'enceinte à huile (100), le support de palier (1) comportant en outre une pluralité de conduits de récupération d'huile (8) débouchant d'un côté sur l'enceinte interne aval (150) et de l'autre côté sur l'enceinte de palier amont (160), le support de palier (1) étant **caractérisé en ce que** les conduits de récupération d'huile (8) débouchent sur l'enceinte de palier amont (160) en aval de la soudure (135) de la virole extérieure (13) sur la bride (15) et **en ce que** la soudure (135) de la virole extérieure (13) est axisymétrique.

2. Support de palier (1) selon la revendication précédente, dont les conduits de récupération d'huile (8) font saillie extérieurement radialement à partir de la partie tronconique (11).

3. Support de palier (1) selon l'une des revendications précédentes, comportant trois conduits de récupération d'huile (8).

4. Support de palier (1) selon l'une des revendications précédentes, dont les conduits de récupération d'huile (8) sont régulièrement répartis angulairement.

5. Support de palier (1) selon l'une des revendications précédentes, dont les conduits de récupération d'huile (8) présente chacun une section sensiblement d'une forme parmi les formes rectangulaire, circulaire et ovale.

6. Support de palier (1) selon l'une des revendications précédentes, dont la partie tronconique (11) présente un diamètre augmentant vers l'aval à partir du palier amont (6).

7. Support de palier (1) selon l'une des revendications précédentes, comportant en outre une partie flasque (12) qui s'étend à partir de la partie tronconique (11) jusqu'au palier aval (5).

8. Support de palier (1) selon la revendication 7, dont la partie flasque (12) est tronconique, son diamètre diminuant vers l'aval.

9. Support de palier (1) selon l'une des revendications 7 ou 8, dont la partie flasque (12) présente en outre une bride interne radiale (17) à son extrémité aval, la bride interne radiale (17) reliant la partie flasque (12) à un couvercle d'arrivée d'huile.

10. Turbomachine, en particulier turboréacteur comportant un support de palier (1) selon l'une des revendications précédentes

## Patentansprüche

1. Lagerträger (1) einer Turbomaschine, insbesondere ein Turbostrahltriebwerk, der ein oberstromiges Lager (6) trägt und damit einen Öltank (100) und einen Lufttank (200) definiert, wobei der Lagerträger (1) einen kegelstumpfförmigen Teil (11) umfasst, der eine oberstromige Lagerkammer (160) und eine unterstromige Innenkammer (150) definiert, wobei der Lagerträger (1) außerdem einen äußeren Klemmring (13) umfasst, der durch eine Schweißnaht (135) mit einem Flansch (15) verbunden ist, der sich außen ab dem kegelstumpfförmigen Teil (11) erstreckt, der äußere Klemmring (13) eine Dichtungsschnecke (131) trägt, die mit dem oberstromigen Lager (6) zusammenwirkt, um die Dichtheit des Öltanks (100) zu gewährleisten, wobei der Lagerträger (1) ferner eine Mehrzahl von Ölrückführleitungen (8) umfasst, die auf einer Seite zur unterstromigen Innenkammer (150) führen und auf der anderen Seite zur oberstromigen Lagerkammer (160), wobei der Lagerträger (1) **dadurch gekennzeichnet ist, dass** die Ölrückführleitungen (8) zur oberstromigen Lagerkammer (160) unterhalb der Schweißnaht (135) des äußeren Klemmrings (13) auf dem Flansch (15) führen, und dadurch, dass die Schweißnaht (135) des äußeren Klemmrings (13) axialsymmetrisch ist.

2. Lagerträger (1) nach vorstehendem Anspruch, dessen Ölrückführleitungen (8) außen einen radialen Vorsprung ab dem kegelstumpfförmigen Teil (11) bilden.

3. Lagerträger (1) nach einem beliebigen der vorstehenden Ansprüche, der drei Ölrückführleitungen (8) umfasst.

4. Lagerträger (1) nach einem beliebigen der vorstehenden Ansprüche, dessen Ölrückführleitungen (8) gleichmäßig im Winkel verteilt sind.

5. Lagerträger (1) nach einem beliebigen der vorstehenden Ansprüche, dessen Ölrückführleitungen (8) jeweils einen Querschnitt in deutlich einer Form unter den rechteckigen, kreisrunden und ovalen Formen aufweist.

6. Lagerträger (1) nach einem beliebigen der vorstehenden Ansprüche, dessen kegelstumpfförmiger Teil (11) einen in unterstromiger Richtung ab dem oberstromigen Lager (6) zunehmenden Durchmesser aufweist.

7. Lagerträger (1) nach einem beliebigen der vorstehenden Ansprüche, der ferner einen Flanschteil (12) umfasst, der sich ab dem kegelstumpfförmigen Teil (11) bis zum unterstromigen Lager (5) erstreckt.

8. Lagerträger (1) nach Anspruch 7, dessen Flanschteil (12) kegelstumpfförmig ist, und sein Durchmesser in unterstromiger Richtung abnimmt.

9. Lagerträger (1) nach einem beliebigen der vorstehenden Ansprüche 7 oder 8, dessen Flanschteil (12) ferner an seinem unterstromigen Ende einen radialen Innenflansch (17) aufweist, wobei der radiale Innenflansch (17) den Flanschteil (12) mit einem Ölzulaufdeckel verbindet.

10. Turbomaschine, insbesondere ein Turbostrahltriebwerk, die einen Lagerträger (1) nach einem beliebigen der vorstehenden Ansprüche umfasst.

## Claims

1. A turbomachine, particularly turbojet, bearing support (1) supporting an upstream bearing (6) and defining with it an oil chamber (100) and an air chamber (200), the bearing support (1) comprising a frusto-conical portion (11) defining an upstream bearing chamber (160) and a downstream inner chamber (150), the bearing support (1) further comprising an outer ferrule (13) connected by a weld (135) to a flange (15) extending outside from the frusto-conical portion (11), the outer ferrule (13) bearing a gimlet seal (131) cooperating with the upstream bearing (6) for sealing the oil chamber (100), the bearing support (1) further including a plurality of oil recovery ducts (8) leading on one side to the downstream inner chamber (150) and on the other side to the upstream bearing chamber (160), the bearing support (1) being **characterized in that** the oil recovery ducts (8) lead to the upstream bearing chamber (160) downstream of the weld (135) of the outer ferrule (13) to the flange (15) and **in that** the weld (135) of the outer ferrule (13) is axisymmetric.

2. The bearing support (1) according to the preceding claim, the oil recovery ducts (8) whereof protrude outside radially from the frusto-conical portion (11).

3. The bearing support (1) according to one of the preceding claims, including three oil recovery ducts (8).

4. The bearing support (1) according to one of the preceding claims, the oil recovery ducts (8) whereof are regularly distributed angularly.

5. The bearing support (1) according to one of the preceding claims, the oil recovery ducts (8) whereof each have a section substantially of a shape among the rectangular, circular and oval shapes.

6. The bearing support (1) according to one of the preceding claims, the frusto-conical portion (11) whereof has a diameter which increases downstream starting at the upstream bearing (6).

7. The bearing support (1) according to one of the preceding claims, further including a flange portion (12) which extends from the frusto-conical portion (11) to the downstream bearing (5).

8. The bearing support (1) according to claim 7, the flange portion (12) whereof is frusto-conical, its diameter decreasing downstream.

9. The bearing support (1) according to one of claims 7 or 8, the flange portion (12) whereof further has an inner radial flange (17) at its downstream end, the inner radial flange (17) connecting the flange portion (12) to an oil intake cover.

10. A turbomachine, particularly a turbojet, comprising a bearing support (1) according to one of the preceding claims.
